# EUROPEAN PATENT SPECIFICATION

(11) **EP 3 839 177 B1**
(45) Date of publication and mention of the grant of the patent: **02.08.2023**
(21) Application number: 19217704.6
(22) Date of filing: 18.12.2019
(51) Int. Cl.: E05B 15/10, E05B 65/10, B64C 1/14, B64D 25/00, E05C 9/06

(54) **AIRCRAFT DOOR WITH A DOOR LOCK HAVING A SELF-OPENING LATCH AND AIRCRAFT HAVING SUCH AN AIRCRAFT DOOR**
FLUGZEUGTÜR MIT EINEM TÜRSCHLOSS MIT SELBSTÖFFNENDER VERRIEGELUNG UND FLUGZEUG MIT EINER SOLCHEN FLUGZEUGTÜR
PORTE D'AÉRONEF AVEC UNE SERRURE DE PORTE DOTÉE D'UN VERROU À OUVERTURE AUTOMATIQUE ET AÉRONEF DOTÉ D' UNE TELLE PORTE

(43) Date of publication of application: 23.06.2021
(73) Proprietor: Airbus Operations GmbH, 21129 Hamburg (DE); Airbus SAS, 31700 Blagnac (FR)
(72) Inventor: Andreas, Poppe, 21129 Hamburg (DE); Benthien, Herrmann, 21129 Hamburg (DE); Cachelet, Jean-Pierre, 31700 Blagnac (FR); Dicks, Danny, 21129 Hamburg (DE)
(74) Representative: Humpf, Andreas

(56) References cited:
- WO-A1-2014/016283
- WO-A1-2017/208157
- DE-U1-202014 010 437
- US-A- 5 326 140
- US-B2- 6 761 337

## Description

The invention relates to an aircraft door with a door lock having a self-opening latch and an aircraft including such aircraft door. In particular, the invention relates to an aircraft door and aircraft having a latch blocked by a retaining element in a closing position of the latch and a biasing element moving the latch into an open position.

Conventional doors and particularly aircraft doors are equipped with one or more latches that are moved from a closing position to an open position, for example, by operating a connected handle. The handle also moves the door within a door frame into a position, where it is free to move. Once the latch and door have been moved with the handle into an open position, the aircraft door is released from the door frame and can be pushed open.

Some aircrafts are equipped with emergency doors, such as over wing exit doors, which are closed for the majority of the lifetime of the aircraft. Such doors, particularly during flight, are subject to an air pressure inside of the aircraft acting on the door and pushing it towards the exterior of the aircraft. Thus, the over wing exit doors include door fittings which support the door towards the exterior of the aircraft. This requires the door, when opened, to be pulled inside of the aircraft, turned around and thrown out of the door opening.

Furthermore, US 5,326,140 shows a panel closure device that can rapidly and repeatedly be opened and closed, such as a pair of facing panels. A rotary latch is pushed through openings in strikers of the panels, providing an irresistible force against relative movement of the panels. The rotary latch withdraw from the openings with the aid of a spring. A rotatable eccentric cam rotates in a plane parallel to a plane of the panel and has a region of a minimum uniform radius and an eccentric region of maximum radius. Whenever the cam is rotated to a position at which its eccentric region of maximum radius abuts the rotary latch, the rotary latch is pushed through the openings in the strikers, and whenever the cam is rotated to a position at which its region of minimum radius faces the rotary latch, the rotary latch withdraws from the openings. A rod may connect the cams of similar latches.

It is, therefore, an object of the invention to provide a door lock, an aircraft door and an aircraft having such a door that renders the door lighter.

This object is achieved by an aircraft door with the features of claim 1. Preferred embodiments are defined by the dependent claims.

According to the invention, an aircraft door comprises a plurality of door locks, wherein each of these locks comprises a base element configured to be mounted to a door, a latch movably coupled to the base element and configured to move from a closing position to an open position, and a retaining element configured to move from a blocking position, in which the retaining element blocks the latch in the closing position of the latch, to a release position releasing the latch. Thus, the latch cannot be opened simply, via a connected handle, but is blocked in its closing position by a retaining element. Particularly in case of an emergency exit door such retaining element helps to keep the door lock closed, even over a longer period of time.

The door lock further comprises a biasing element configured to move the latch from the closing position to the open position. This biasing element provides for a self-opening of the latch and, hence, the door lock, once the retaining element is moved to its release position. In view of the example of an emergency exit door the retaining element is moved into its release position in case of an emergency and the door lock is opened automatically due to the biasing element moving the latch from the closing position into the open position.

In an implementation variant the latch can be pivotally or slidably connected to the base member. In other words, any kind of latch can be employed, which pivots or slides or performs any combination of pivoting and sliding from its closing position into its open position.

In a further implementation variant the biasing element can be a spring or other elastically deformable element. The biasing element, hence, exerts a force onto the latch when the latch is in its closing position. The biasing element optionally can be connected to the latch, so that the biasing element is biased by moving the latch from the open position to the closing position. Once the retaining element is brought into its releasing position, i.e. freeing the latch, the force exerted from the biasing element onto the latch forces the latch open.

It is therefore possible to implement the retaining element in any arbitrary form, as long as it blocks the latch from being moved to its open position by the biasing element. A fast removal of the retaining element allows an easy and fast release (opening) of the door lock and, hence, of the door itself.

According to the invention, the retaining element comprises a blocking
body sized and configured to be trapped between the latch and the base element when the latch is in the closing position. In other words, the biasing element can exert a force onto the blocking body via the latch, so that the blocking body of the retaining element is trapped.

In a further variant the blocking body can comprise an arm pivotally connected to the base member. The blocking body, hence, can be moved from its blocking position to the release position by pivoting the arm relative to the base member.

In a particular implementation variant the arm of the blocking body can have a front end that abuts against a surface of the latch when the retaining element is in the blocking position and the latch is in the closing position. This front end may form a front face contacting/abutting the surface of the latch. The surface of the latch is at least a portion of a side of the latch facing the retaining element and particularly facing a direction of movement of the latch from the closing position to the open position.

Additionally or alternatively, the arm of the blocking body can have a side surface. A surface of the latch may abut against a portion of the side surface of the retaining element when the retaining element moves from the blocking position to the closing position. The surface of the latch abutting against the portion of the side surface of the retaining element can be the same surface of the latch abutting against the front end of the blocking body or can be a portion of the latch adjacent or near the surface abutting against the front end of the blocking body.

Since the latch is moved by the biasing element, once the blocking body is moving out of its blocking position, the biasing force of the biasing element can be transferred from the surface of the latch to the side surface of the blocking body. Since the blocking body is pivotally connected to the base member, the latch moved by the biasing element pushes the blocking body further to the release position of the blocking body (of the retaining element). Thus, it is sufficient if the retaining element is moved only a small portion of the way between the blocking position and the release position by an external force, while the remaining way to the release position can be forced by the latch moved by the biasing element.

In another implementation variant the door lock can further comprise a connecting rod pivotally coupled to the retaining element and configured to move the retaining element from the blocking position to the release position. The connecting rod can push or pull the retaining element out of its blocking position. For instance, the connecting rod can include a push rod or an element pulling the retaining element.

The connection between the connecting rod and the retaining element can be implemented at the blocking body directly, which leads to a very compact door lock. In order to exert higher forces on the blocking body to move the blocking body out of its blocking position, the connecting rod may be connected to a lever arm coupled to or integrated with the blocking body. For instance, the lever arm of the retaining element may extend from a pivot point of the arm of the blocking body pivotally connected to the base member in a direction opposite of the blocking body. In other words, the lever arm can be an extension of the arm of the blocking body while the pivot point of the arm of the blocking body is between the arm of the blocking body and the lever arm.

In a further implementation variant the retaining element can comprise a mover connected to the blocking body and sized to loosely fit between the latch and the base element when the latch is in the release position. Such mover can be implemented as a wire, string, chain, bar, etc. that is capable of pulling or pushing the blocking body from its blocking position to its release position. Moreover, the size of the mover is chosen small enough to loosely fit between the latch and the base element when the latch is in its release position, i.e. in an area that has been occupied by the blocking body in its blocking position and is now partly occupied by the latch in its release position. Optionally, the latch and/or base member may include a groove or recess configured to receive the mover when the retaining element is in its blocking position and the latch is in its release position.

In another implementation variant a surface of the latch can have a groove or notch configured to hold at least a portion of the blocking body. Additionally or alternatively, a surface of the base element can have a groove or notch configured to hold at least a portion of the blocking body. This/these groove/s or notch/es holding a portion of the blocking body hinders the blocking body from easily being moved out of its blocking position. However, once the portion of the blocking body is moved away from the groove/s or notch/es, the moving of the blocking body towards its release position is easier.

Further additionally or alternatively, the blocking body can have a protrusion configured to fit into the groove or notch of the latch or the groove or notch of the base element. Thus, a form fit connection between blocking body and the latch and/or base element can be achieved. Once the blocking body has been moved out of its blocking position in as much that the protrusion has left the groove or notch of the latch and/or the protrusion has left the groove or notch of the base element, the form fit has been released and the further moving of the blocking body may be easier. Optionally, the blocking body or at least a portion thereof, such as the protrusion, may be made of an elastic material. Thus, leaving the blocking position is made easier.

In a further implementation variant the at least one door lock can be mounted at an outer peripheral or circumferential area of to the door. This allows the door lock to interact with any element arranged adjacent to our next to the door. For instance, the latch may be configured to extend beyond the outer peripheral or circumference of the door when the latch is in the closing position. Furthermore, the latch may further be configured to not extend beyond the outer peripheral or circumference of the door when the latch is in the open position. In other words, the latch does not stick out of the door (when viewed substantially perpendicularly to a door plane) when in its open position.

According to the invention, the aircraft door comprises a door frame, a door arranged inside of the door frame, and a plurality of door locks as defined in claim 1. A door, according to this invention closes at least portions of an opening defined by the door frame. Thus, a door is meant to refer to a door leaf like element.

The plurality of door locks is mounted on the door. For instance, the plurality of door locks at can be mounted at an outer peripheral or circumferential area of the door.

According to the invention, the latch is configured to overlap with a portion of the door frame when the latch is in the closing position and to not overlap with the portion of the door frame when the latch is in the open position. In other words, the latch is configured to extend beyond an outer peripheral or circumference of the door when the latch is in the closed position. Thus, the latch overlaps a portion of the door frame arranged next to the door, when the door is in a closed state. The latch is furthermore configured to not extend beyond the outer peripheral or circumference of the door when the latch is in the open position.

The door can freely move within the door frame, as the latch in its open position does not overlap with the door frame anymore. On the other hand, when the latch is in the closing position, the latch can abut against an inner surface of the door frame. Therefore, a force acting on the door from an inner side of the door to an exterior of the door can be transferred via the latch abutting the door frame. For instance, an internal pressure acting against the door is transferred via the latch into the door frame and thereby holds the door in place.

According to the invention, the door lock furthermore comprises a stopper coupled to the latch and configured to abut against a portion of the door frame when the latch of the at least one door lock is in the closing position. The stopper can be configured to be adjustable (movable) in relation to the latch, so that it extends from the latch in an adjustable manner. In other words, tolerances between the door frame and the door (and hence the latch in its closing position) can be compensated by adjusting (a length) of the stopper. For instance, the stopper may include a threaded portion coupled to a threaded portion of the latch allowing adjustability of the length of the latch. Therefore, the stopper bridges a gap between the door frame and the latch.

In another implementation variant the aircraft door further comprises an actuator configured to move the retaining element of the at least one door lock from the blocking position at least partially towards the release position. The actuator can be a handle coupled to the door lock, and particularly coupled to the retaining element, in order to at least partially move the retaining element from the blocking position towards its release position. Additionally or alternatively, the actuator comprises an electric, pneumatic or hydraulic actuator coupled to the retaining element, in order to achieve the movement towards the release position of the retaining element. Further additionally or alternatively, the actuator can comprise a pyrotechnical actuator, which moves the retaining element towards its release position or destroys the retaining element, particularly the blocking body. In the latter case, the release position of the retaining element is not achieved via movement of the retaining element, but by destroying at least parts of the retaining element, which are hence moved out of the way allowing the latch to move to its open position.

In a further implementation variant the aircraft door can have a plurality of door locks and may further comprise a plurality of connecting rods coupled to the retaining elements of adjacent door locks. In other words, the connecting rods link the retaining elements of adjacent door locks. For instance, each connecting rod can be configured to move each retaining element of the adjacent door locks from the blocking position to the release position. Thus, parallel movement of retaining elements of adjacent door locks can be achieved.

In a variant, a particular number of connecting rods is provided that allows movement of all retaining elements of all door locks at the same time. Thus, a single actuator can be used to move all retaining elements from their blocking position to their release position and, hence, allows all latches of all door locks to move into their open position substantially at the same time.

In a variant, an aircraft can comprise an aircraft door according to the invention or one of its variants.
The aircraft door can be an over wing emergency exit door.

The present invention is solely defined by the appended claims.

Preferred embodiments of the invention are now explained in greater detail with reference to the enclosed schematic drawings, in which
- Figure 1: schematically illustrates an interior view of an aircraft door;
- Figure 2: schematically illustrates a plurality of door locks in a closed state and an open state;
- Figure 3: schematically illustrates details of a door lock;
- Figure 4: schematically illustrates side views of a door lock in an open state;
- Figure 5: schematically illustrates a plurality of interlinked door locks in a closed state;
- Figure 6: schematically illustrates a plurality of interlinked door locks in an open state;
- Figure 7: schematically illustrates a pair of adjacent door locks with a blocking body variant;
- Figure 8: schematically illustrates a pair of adjacent door locks with a further blocking body variant;
- Figure 9: schematically illustrates a pair of adjacent door locks with another blocking body variant;
- Figure 10: schematically illustrates details of a door lock;
- Figure 11: schematically illustrates different views of door locks in different states during opening;
- Figure 12: schematically illustrates an aircraft door in an open state; and
- Figure 13: schematically illustrates an aircraft having at least one door.

Elements and components, which are identical in the Figures or at least provide the same functionality, are provided with the same reference numeral. In order to increase visibility of the elements and components shown in the drawings, not each and every element/component is provided with a reference sign in each drawing, which has been provided with a reference sign in another drawing.

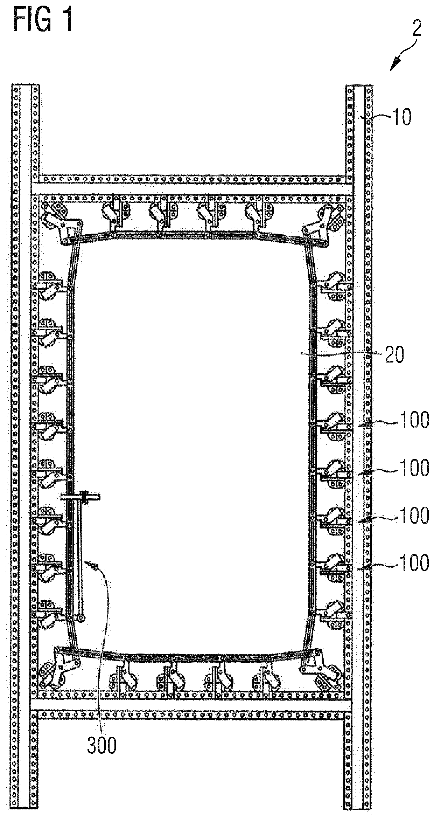

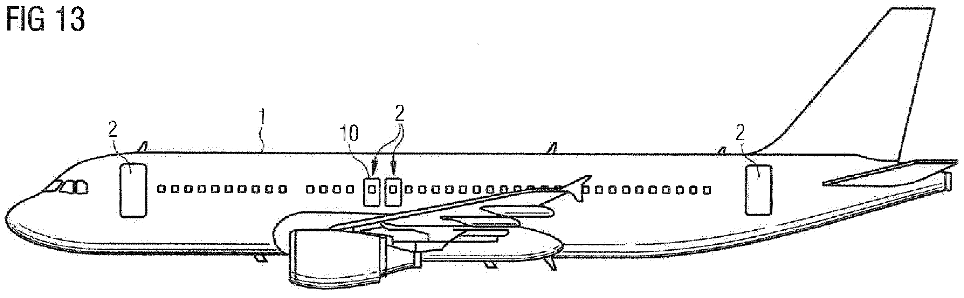

Figure 1 schematically illustrates an interior view of an aircraft door 2 having a plurality of door locks 100. The aircraft door 2 comprises a door frame 10 and a door 20 arranged inside of the door frame 10. Although the door frame 10 is illustrated in a rectangular form, the door frame 10 and door 20 can have any shape. Preferably, the door 20 has a circumferential outline (shape) that corresponds to the opening 4 (Figure 13) of the door frame 10. An optional sealing (not illustrated) may be provided between the circumferential outline of the door 20 and the edges forming the opening 4 of the door frame 10.

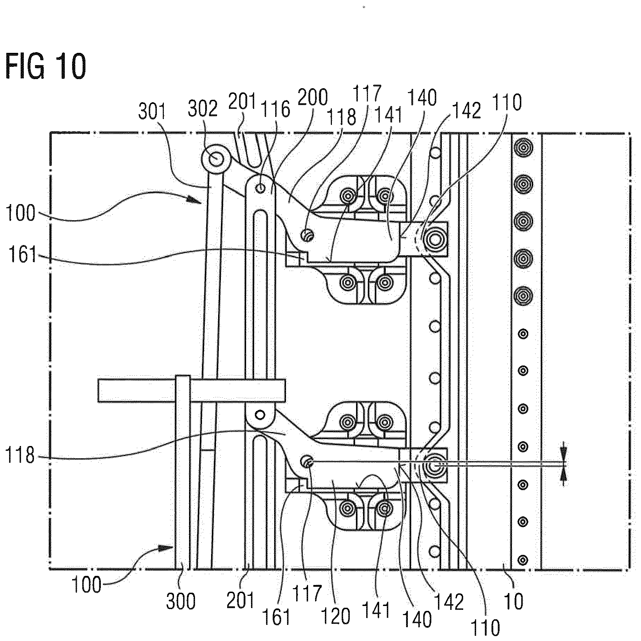

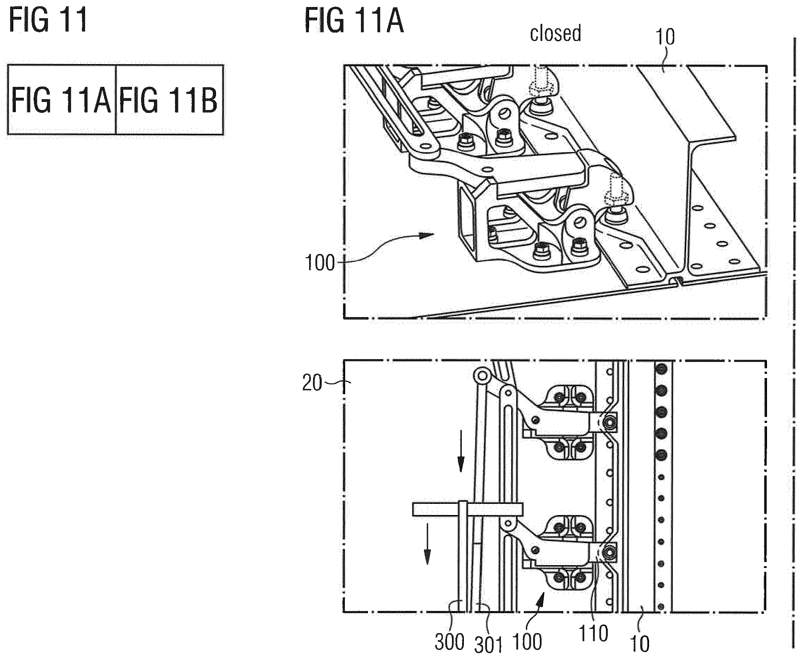

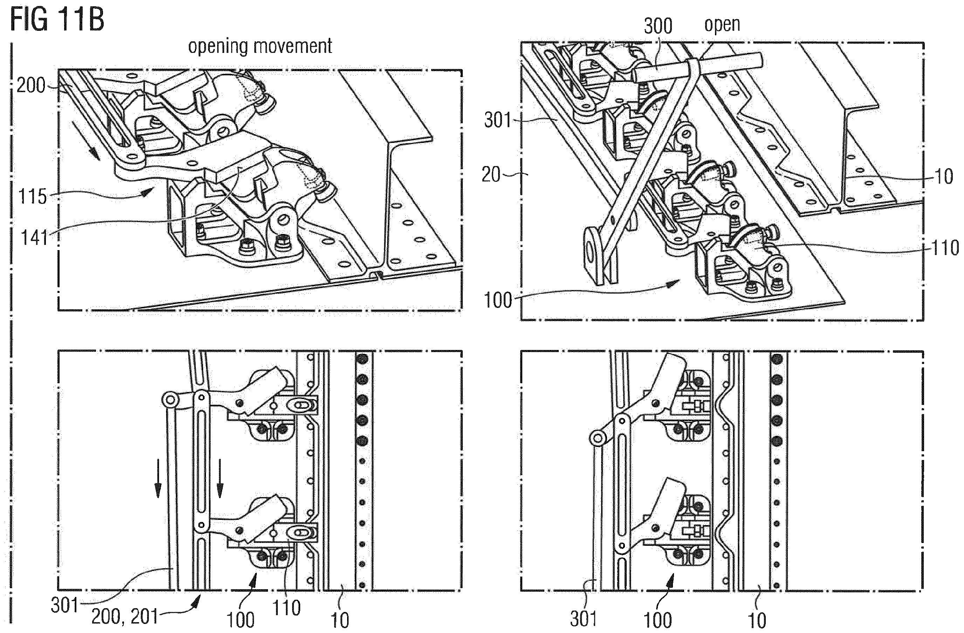

The plurality of door locks 100 is mounted to the door 20 on an interior side of the door 20, i.e. a side of the door 20 facing the interior of the aircraft 1 (Figure 14). The door locks 100 can be arranged at an outer periphery of the door 20, i.e. an area of the door 20 close to the door frame 10 when the door 20 is in a closed position. As is illustrated in more detail in view of Figures 10 and 11 an actuator 300 of the aircraft door 2 can be configured to move a particular portion of each door lock, in order to open and close the door 20.

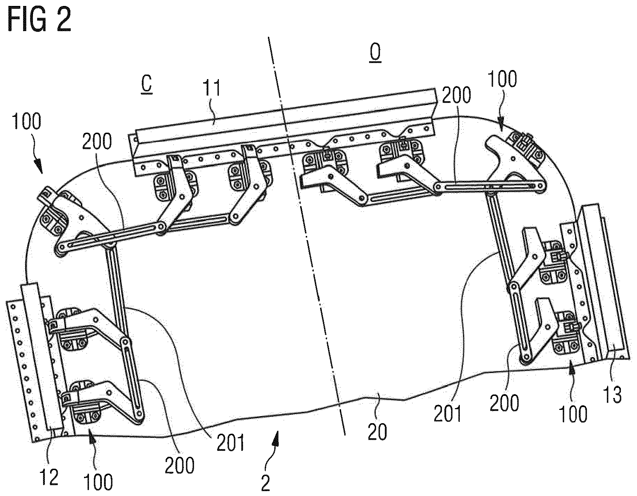

Figure 2 schematically illustrates a portion of the aircraft door 2 including a plurality of door locks 100 in a closed state (left-hand side of the drawing) and in an open state (right-hand side of the drawing). The door 20 is in a closed state and, for example, abuts to at least a portion of the door frame 10. For instance, the door frame 10 can comprise a first door frame 11 forming a sill and a second and third door frame 12, 13 forming a respective side of the door frame 10. Portions of the door 20 at its outer periphery can abut to the first to third door frame 11, 12, 13 at portions thereof facing to an exterior of the aircraft 1. Thus, the door 20 can open towards the exterior of the aircraft 1.

On the left-hand side of Figure 2 the door locks 100 are closed and include a portion that abuts an interior surface of one of the first to third door frames 11, 12, 13. Thus, each door lock 100 holds the door 20 in its closed state and prevents the door 20 from opening. This further allows the door lock 100 to transfer any forces acting on the door 20 into the door frame 10. On the right-hand side of Figure 2 the door locks 100 are illustrated in an open state. Here the portion of the door locks 100 has been removed, to not abut the interior surface of the door frame 10. In order to open and close all door locks 100 at the same time, adjacent door locks 100 are connected (interlinked) with one another via a connecting rod 200, 201.

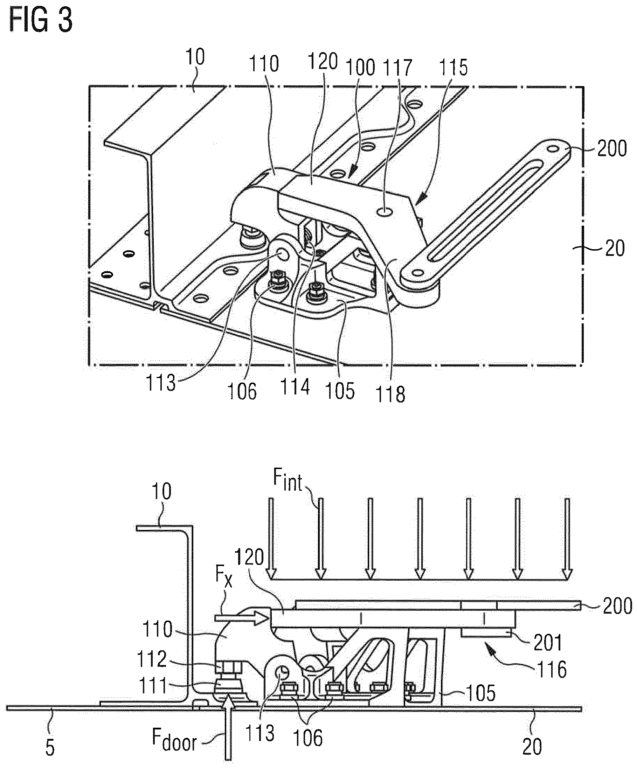

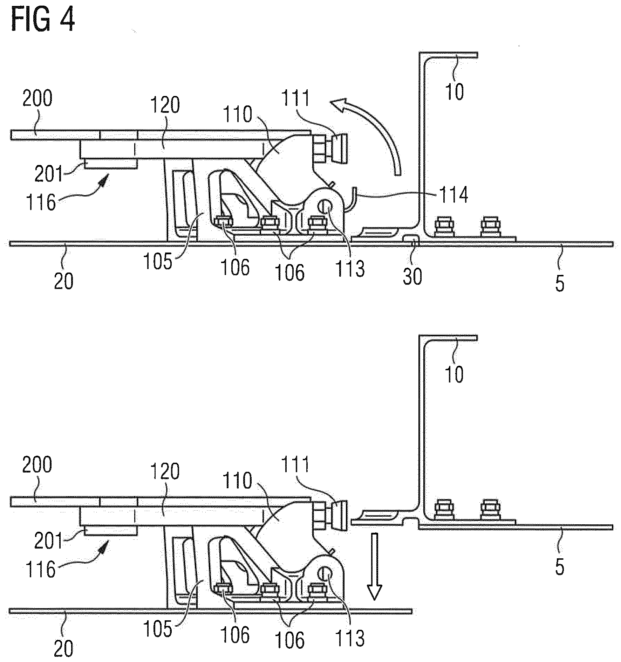

Figure 3 schematically illustrates details of a door lock 100 in a perspective view and a side view (cross-section). The door lock 100 comprises a base element 105 that is mounted to the door 20. For instance, fasteners 106, such as bolts and nuts, can be used to mount the door lock base member 105 to the door 20. The base member 105 provides a pivot axis 113 at which a latch 110 is movably coupled to the base member 105. At the pivot axis 113 a biasing element 114 can be arranged, which is configured to move the latch 110 from a closing position (illustrated in Figure 3) to an open position (illustrated in Figure 4). The biasing element 114 can be a spring or other elastically deformable component that exerts a force onto the latch 110. The biasing element 114 can be biased when the latch 110 is brought into the closing position as shown in Figure 3.

Instead of a pivot axis 113 the base member 105 can comprise sliding elements (not illustrated), along which the latch 110 can slide. In this variant the biasing element 114 also exerts a force onto the latch 110 to pull the latch 110 closer to the base member 105, i.e. to pull and slide the latch 110 to an open position of the latch 110.

The latch 110 can include a stopper 111 coupled to the latch 110 and configured to abut against a portion of the door frame 10 when the latch 110 is in a closing position as illustrated in Figure 3. The length of the stopper 111, i.e. the size of extension of the stopper 111 from the latch 110 can be adjusted with an adjuster 112. For instance, the stopper 111 can have a threaded portion which engages with an adjuster 112 in the form of a nut, so that a size of the stopper 111 extending from the latch 110 can be adjusted.

The door lock 100 can further include a retaining element 115 configured to move from a blocking position as illustrated in Figure 3, in which the retaining element 115 blocks the latch 110. The retaining element 115 can comprise a blocking body 120 sized and configured to be trapped between the latch 110 and the base element 105 when the latch 110 is in its closing position.

Figures 3 and 4 schematically illustrate a blocking body 120 comprising an arm pivotally connected to the base member 105 at a pivot axis 117. In the blocking position of the retaining element 115 (illustrated in Figure 3) the blocking body 120 hinders latch 110 to be moved from the closing position towards an open position due to the force Fₓ exerted onto the latch 110 by the biasing element 114. At this time, any force Fᵢₙₜ acting on the door 20 can be transferred via base element 105, latch 110 and stopper 111 into the door frame 10 (F_{door}).

Once the blocking body 120 is moved out of the way of the latch 110, i.e. the retaining element 115 is brought into a release position releasing the latch 110, the latch 110 can move in an open position by the biasing element 114. For instance, the latch 110 can swing open (pivot) as is illustrated in Figure 4. In the release position the latch 110 does not overlap with any portion of the door frame 10 anymore, so that any forces acting on the door 20 are not transferred into the door frame 10. Thus, the door 20 can be moved away from door frame 10 and, hence, door 20 can be opened.

Bringing the retaining element 115 in the release position is achieved with the structure of Figures 3 and 4 by rotating blocking body 120 around pivot axis 117. This can be achieved by a connecting rod 200 pivotally coupled to the retaining element 115. For instance, the retaining element 115 can further comprise a lever arm 118 extending from the blocking body 120 opposite of pivot axis 117.

Figure 4 further illustrates a groove 30 in door frame 10, in which a seal (not illustrated) can be arranged. The seal closes a gap between door 20 and door frame 10, when the door 20 is closed in the opening 4 of door frame 10.

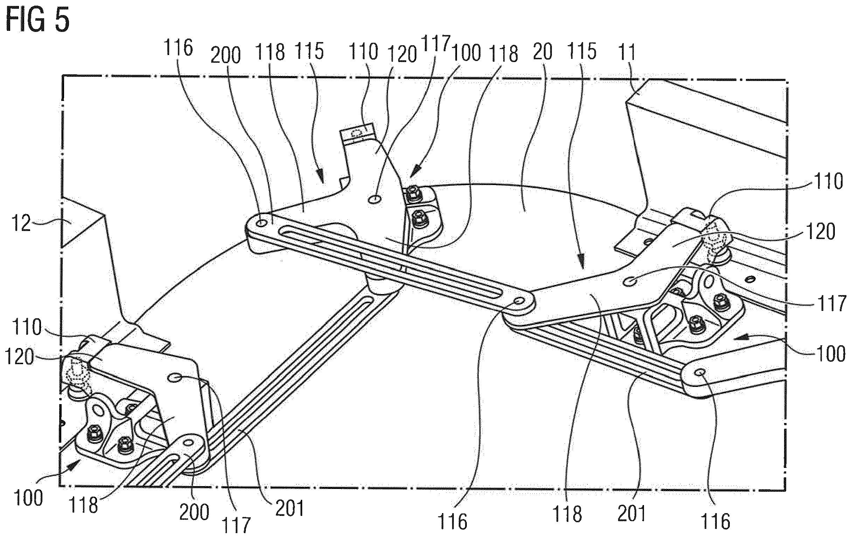

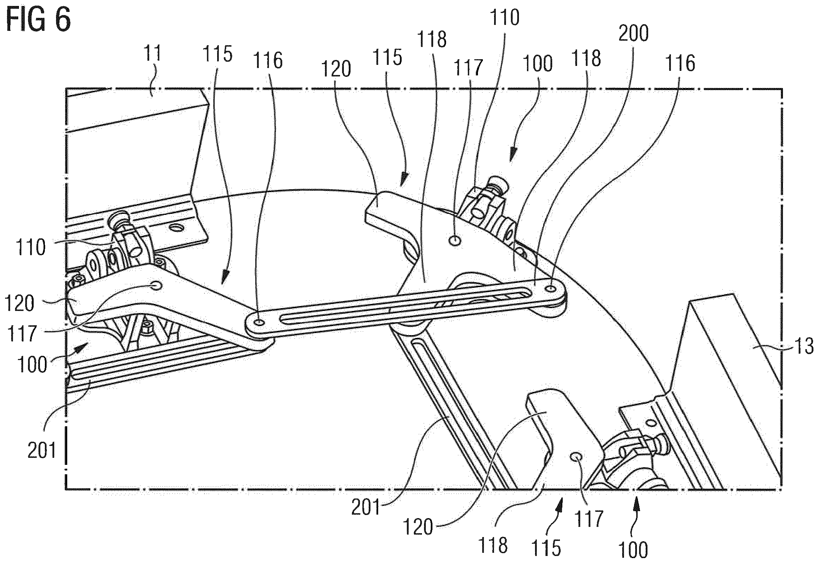

As is illustrated in Figures 5 and 6 a plurality of door locks 100 may be connected via a connecting rod 200 and 201. Figure 5 illustrates the door locks 100 with the latch 110 in the closing position. Adjacent door locks 100 are pairwise connected or interlinked via a connecting rod 200 or connecting rod 201. Each connecting rod 200, 201 is pivotally coupled to a retaining element 115 at a pivot axis 116. Some of the door locks 100 can be coupled to two connecting rods 200, 201 at the same pivot axis 116. Another door lock 100, particularly arranged in a corner of the door 20, comprises a retaining element 115 having two lever arms 118, each of which is coupled to a respective connecting rod 200 and 201. This allows guiding the opening/closing forces exerted via the connecting rods 200, 201 in a different direction. For instance, a first plurality of door locks 100 can be arranged substantially parallel to a first door frame 11, while a second plurality of door locks 100 can be arranged substantially parallel to a second door frame 12. The first plurality of door locks 100 is interlinked with connecting rods 200, 201 arranged substantially parallel to the first door frame 11, while the second plurality of door locks 100 is interlinked with connecting rods 200, 201 arranged substantially parallel to the second door frame 12. If anyone of the connecting rods 200, 201 and/or retaining element 115 is moved, all connected/interlinked retaining elements 115 are moved altogether. Figure 6 illustrates a plurality of door locks 100 with their respective retaining element 115 in the release position and the respective latch 110 in the open position.

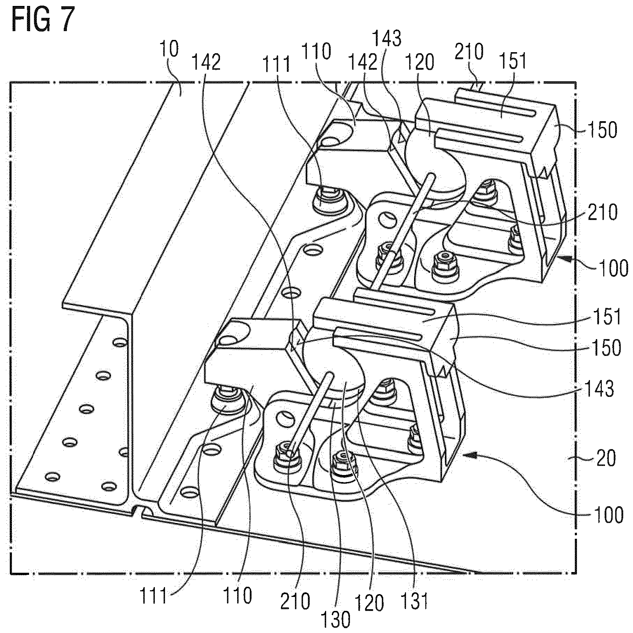

Figure 7 schematically illustrates a pair of adjacent door locks 100 with a blocking body variant. The blocking body 120 of the retaining element 115 has a ball shaped form. The base element 105 can have a surface 130 corresponding to the outer surface of the ball-shaped blocking body 120, so that the base element 105 can at least partially hold the blocking body 120 in a form-fit manner. The surface 130 of the base element 105 can include a groove or notch 131 configured to hold at least a portion of the blocking body 120. This groove or notch 131 allows for better retaining the blocking body 120 in the blocking position.

An optional component can be a cover 150 provided onto the base element 105. This cover 150 can further include a clip 151 that is flexibly coupled to the cover 150 and/or the base element 105 and is further configured to hold the blocking body 120. Alternatively, the cover 150 and clip 151 can be integrated into the base element 105, for example, extending from the surface 130.

A further optional feature can be a groove or notch 143 in a surface 142 of the latch 110. This groove or notch 143 is also configured to hold at least a portion of the blocking body 120. The ball-shaped blocking body 120, hence, can be hold between latch 110 and base element 105 (and/or cover 150), while the blocking body 120, i.e. the retaining element 115, is in its blocking position. In the configuration illustrated in Figure 7, the latch 110 of each door lock 100 is in the closing position and closes door 20 against door frame 10.

In order to open the door 20, the blocking bodies 120 have to be pulled or pushed out of their blocking position. This may be achieved by a mover 210 connected to the blocking body 120 and sized to loosely fit between the latch 110 and the base element 105 when the latch 110 is in the release position. For instance, the mover 210 can be a wire, chain, string, etc. connecting a plurality of blocking bodies 120 of adjacent door locks 100. By pulling the mover 210 (or pushing in case of a rigid mover 210) each blocking body 120 is moved out of the blocking position, i.e. next to the base element 105. This allows the biasing element 114 to move the latch 110 into the open position of the latch 110.

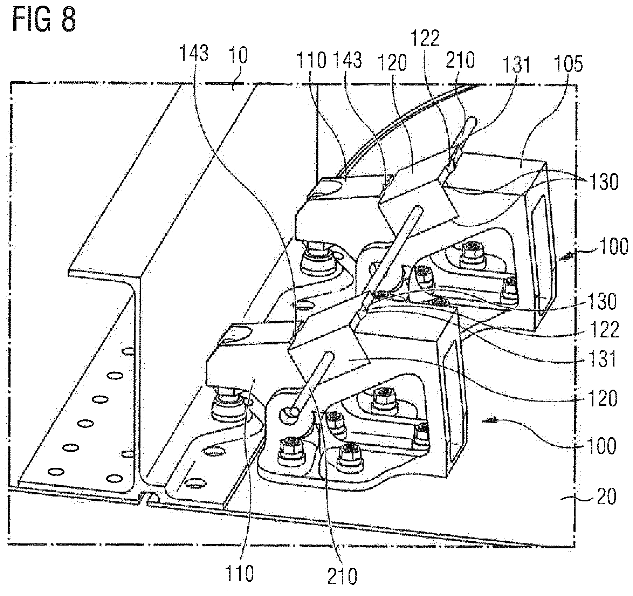

A further variant of the blocking body 120 is illustrated in Figure 8 which is quite similar to the variant illustrated in Figure 7. The blocking body 120 has a rather rectangular shape, while the base element 105 has a corresponding rather rectangular surface 130. The latch 110 includes a surface 142 (only a small portion is visible in Figure 8) that forms a rectangular shape with the surface 130 of the base element 105. Thus, the blocking element 120 is clamped between latch 110 and base element 105. The force exerted by the biasing element 114 onto the latch 110 holds the blocking body 120 in the blocking position. The blocking body 120, base element 115 and latch 110 are not restricted to a rectangular shape, but may be configured to hold a trapezoidal or differently formed blocking body 120.

The blocking body 120 may also comprise at least one protrusion 122 configured to fit into a groove or notch 143 of the latch 110 or the groove or notch 131 of the base element 105. Thus, the blocking body 120 can further be hold in a form-fit manner in its blocking position. In order to bring the retaining element 115 (blocking body 120) into its release position, a mover 210 can be provided with which a plurality of retaining elements 115 can be pulled or pushed out of their blocking position at once.

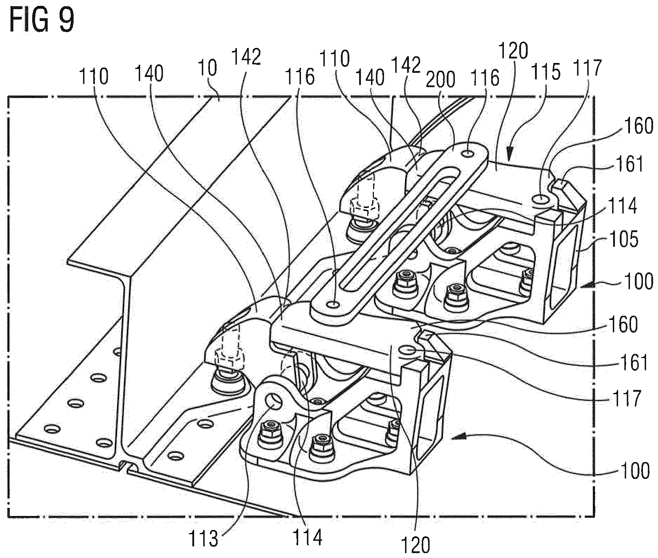

Figure 9 shows a further variant of the blocking body 120, which is a simplified variant of the blocking body 120 illustrated in Figures 1 to 6. The retaining element comprises an arm forming the blocking body 120 and being pivotally connected to the base member 105 at pivot axis 117. In other words, compared to retaining element 115 of Figures 1 to 6 the retaining element 115 of Figure 9 does not have a lever arm 118, and the connecting rod 200 is pivotally connected to the blocking body 120 at pivot axis 116.

As in the variant of Figures 1 to 6, blocking body 120, particularly the arm, has a front end 140 that abuts against the surface 142 of the latch 110 when the retaining element 115 is in the blocking position when the latch 110 is in the closing position. The front end 140 and surface 142 can have a rectangular shape or at least a longitudinal shape, so that the blocking body 120 holds latch 110 securely due to a sufficiently sized coupling area of blocking body 120 and latch 110.

In order to maintain the blocking body 120 in the blocking position, the base element 105 can include a protrusion 161 against which an end portion 160 of the arm (blocking body 120) abuts when the retaining element 115 is in the blocking position. This protrusion 161 further prevents the retaining element 115 from moving in the wrong direction, so that retaining element 115 is only capable of rotating in one direction (in Figure 9 counterclockwise).

As can be seen from Figure 10, the retaining element 115 is pivotally connected to base member 105 in a manner, so that a generalized force Fₓ exerted by the latch 110 (due to biasing element 114) into the retaining element 115 passes the pivot axis 117 of the retaining element 115 with respect to the base member 105 at a distance. This distance is in the direction of the protrusion 161 of the base element 105, so that the force Fₓ creates a closing moment for the blocking body 120 holding the blocking body 120 in its blocking position. Once the retaining element 115 has been moved, for example, via connecting rod 200, so that a side surface 141 of the blocking body 120 abuts against a surface 142 of the latch 110, the force Fₓ creates an opening moment for the blocking body 120. In other words, the surface 142 of the latch 110 or a corner of latch 110 abuts against side surface 141 of the blocking body 120 and pushes blocking body 120 towards its release position. Thus, latch 110 via biasing element 114 facilitates opening of the door lock 100.

Figure 10 further illustrates a portion of an actuator 300 in the exemplary form of a manual handle. Actuator 300 is configured to move the retaining element 115 of at least one door lock 100 from the blocking position at least partially towards the release position. This can be achieved by coupling actuator 300 to a retaining element 115 of at least one door lock 100. For example, the retaining element 115 of one door lock 100 provides a lever arm 118 with a pivot axis 302 to which actuator 300 can be coupled. This coupling may take place via a further connecting rod 301 that is arranged substantially parallel to connecting rod 200, 201.

Figure 11 schematically illustrates different views of the door locks 100 in different states during opening. On the left-hand side, the door 20 is closed and the latches 110 of the door locks 100 are in the closing position holding the door 20 to the door frame 10. In the middle of Figure 11, the actuator 300 is pulled downwards in Figure 11, so that connecting rod 301 is also pulled downwards. Due to the pivotal connection between connecting rod 301 and a retaining element 115, the retaining element 115 rotates around pivot axis 117. The connecting rods 200, 201 are moved downwards in Figure 11 due to their connection to retaining element 115. Thus, the blocking body 120 of retaining element 115 is moved out of the way of surface 142 of latch 110 in each of the door locks 100. In this moment (see for example in the middle of Figure 11) the biasing element 114 moves the latch 110 and, hence, retaining element 115, while latch 110 abuts against side surface 141 of the blocking body 120. Due to further movement of the actuator 300 and/or the biasing forces of biasing elements 114 of all door locks 100 are moved to their open position, as it is illustrated to the right in Figure 11. Thus, in view of Figure 1, one actuator 300 is sufficient to open a circumferential "chain" of door locks 100 simultaneously. Once the latches 110 do not overlap with door frame 10 anymore, door 20 can be opened and moved away from door frame 10.

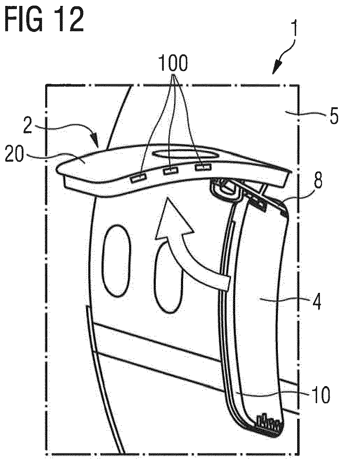

Figure 12 schematically illustrates an aircraft door 2 in an open state, i.e. not blocking opening 4 in the outer skin 5. For example, aircraft door 2 can be mounted to an aircraft fuselage with linkage 8, which pushes aircraft door 2 to an exterior side of the aircraft 1. Thus, when all latches 110 of the door locks 100 of aircraft door 2 reach their open position, the linkage 8 can be used to swing aircraft door 2 open. For example, linkage 8 may include one or more biasing elements forcing the aircraft door 2 towards the exterior. The door 20 of the aircraft door 2 may be aligned flush with an outer skin 5 of the aircraft 1 when aircraft door 2 is in a closed state. The stoppers 111 can be adjusted, so that aircraft door 2 is hold against door frame 10 providing the flush arrangement of door 20 and outer skin 5.

Figure 13 schematically illustrates an aircraft 1 having at least one aircraft door 2. The aircraft door 2 can be a passenger door, through which passengers usually enter or leave the aircraft. Aircraft door 2, on the other hand, can also be an over wing emergency exit door.

## Claims

1. Aircraft door (2), comprising:
- a door frame (10);
- a door (20) arranged inside of the door frame (10); and
- a plurality of door locks (100),
wherein each of the door locks (100) comprises:
-- a base element (105) mounted to the door (20);
-- a latch (110) movably coupled to the base element (105) and configured to move from a closing position to an open position;
-- a stopper (111) coupled to the latch (110);
-- a retaining element (115) configured to move from a blocking position, in which the retaining element (115) blocks the latch (110) in the closing position of the latch (110), to a release position releasing the latch (110); and
-- a biasing element (114) configured to move the latch (110) from the closing position to the open position;
wherein, when the latch (110) of the door lock (100) is in the closing position, the latch (110) overlaps with a portion of the door frame (10) and the stopper (111) abuts against an inner surface of the door frame (10), the inner surface of the door frame (10) facing away from an exterior of the door (2), the stopper (111) transferring a force acting on an inner side of the door (2) towards the exterior of the door (2) into the door frame (10),
wherein, when the latch (110) is in the open position, the latch (110) and the stopper (111) do not overlap with the portion of the door frame (10), and
wherein the retaining element (115) comprises a blocking body (120) sized and configured to be trapped between the latch (110) and the base element (105) when the latch (110) is in the closing position.

2. Aircraft door (2) according to claim 1, wherein the latch (110) is pivotally or slidably connected to the base member (105).

3. Aircraft door (2) according to claim 1 or 2, wherein the biasing element (114) is a spring.

4. Aircraft door (2) according to claim 1, wherein the blocking body (120) comprises an arm pivotally connected to the base member (105).

5. Aircraft door (2) according to claim 4, wherein the arm of the blocking body (120) has a front end (140) that abuts against a surface (142) of the latch (110) when the retaining element (115) is in the blocking position and the latch (110) is in the closing position.

6. Aircraft door (2) according to claim 4 or 5, wherein the arm of the blocking body (120) has a side surface (141), and wherein a surface (142) of the latch (110) abuts against a portion of the side surface (141) of the retaining element (115) when the retaining element (115) moves from the blocking position to the closing position.

7. Aircraft door (2) according to one of claims 1 to 6, further comprising:
- a connecting rod (200) pivotally coupled to the retaining element (115) and configured to move the retaining element (115) from the blocking position to the release position.

8. Aircraft door (2) according to claim 1, wherein the retaining element (115) comprises a mover (210) connected to the blocking body (120) and sized to loosely fit between the latch (110) and the base element (105) when the latch (110) is in the release position.

9. Aircraft door (2) according to claim 8, wherein a surface (142) of the latch (110) has a groove or notch (143) configured to hold at least a portion of the blocking body (120), and/or wherein a surface (130) of the base element (105) has a groove or notch (131) configured to hold at least a portion of the blocking body (120), and
wherein the blocking body (120) has a protrusion (122) configured to fit into the groove or notch (143) of the latch (110) or the groove or notch (131) of the base element (105).

10. Aircraft door (2) according to one of claims 1 to 9, further comprising:
- an actuator (300) configured to move the retaining element (115) of the plurality of door locks (100) from the respective blocking position at least partially towards the respective release position.

11. Aircraft door (2) according to one of claims 1 to 10, further comprising:
- a plurality of connecting rods (200, 201) coupled to the retaining elements (115) of adjacent door locks (100), wherein each connecting rod (200, 201) is configured to move each retaining element (115) of the adjacent door locks (100) from the blocking position to the release position.

12. Aircraft (1) comprising an aircraft door (2) according to one of claims 1 to 11.

## Patentansprüche

1. Luftfahrzeugtür (2), umfassend:
- einen Türrahmen (10);
- eine Tür (20), die innerhalb des Türrahmens (10) angeordnet ist; und
- eine Vielzahl von Türverriegelungen (100),
wobei jede der Türverriegelungen (100) umfasst:
-- ein Basiselement (105), das an der Tür (20) angebracht ist;
-- einen Riegel (110), der beweglich mit dem Basiselement (105) gekoppelt und so konfiguriert ist, dass er sich von einer Schließposition in eine offene Position bewegt;
-- einen Stopper (111), der mit dem Riegel (110) gekoppelt ist;
-- ein Rückhalteelement (115), das so konfiguriert ist, dass es sich von einer Blockierposition, in der das Rückhalteelement (115) den Riegel (110) in der Schließposition des Riegels (110) blockiert, in eine Freigabeposition bewegt, die den Riegel (110) freigibt; und
-- ein Beeinflussungselement (114), das so konfiguriert ist, dass es den Riegel (110) von der Schließposition in die offene Position bewegt;
wobei, wenn sich der Riegel (110) der Türverriegelung(100) in der Schließposition befindet, der Riegel (110) mit einem Abschnitt des Türrahmens (10) überlappt und der Stopper (111) an eine Innenfläche des Türrahmens (10) angrenzt, wobei die Innenfläche des Türrahmens (10) von einer Außenseite der Tür (2) weg weist, wobei der Stopper (111) eine Kraft, die auf eine Innenseite der Tür (2) wirkt, in Richtung der Außenseite der Tür (2) in den Türrahmen (10) überträgt,
wobei, wenn der Riegel (110) in der offenen Position ist, der Riegel (110) und der Stopper (111) nicht mit dem Abschnitt des Türrahmens (10) überlappen, und
wobei das Rückhalteelement (115) einen Blockierkörper (120) umfasst, der so bemessen und konfiguriert ist, dass er zwischen dem Riegel (110) und dem Basiselement (105) eingeklemmt wird, wenn sich der Riegel (110) in der Schließposition befindet.

2. Luftfahrzeugtür (2) nach Anspruch 1, wobei der Riegel (110) schwenkbar oder verschiebbar mit dem Basiselement (105) verbunden ist.

3. Luftfahrzeugtür (2) nach Anspruch 1 oder 2, wobei das Beeinflussungselement (114) eine Feder ist.

4. Luftfahrzeugtür (2) nach Anspruch 1, wobei der Blockierkörper (120) einen Arm umfasst, der schwenkbar mit dem Basiselement (105) verbunden ist.

5. Luftfahrzeugtür (2) nach Anspruch 4, wobei der Arm des Blockierkörpers (120) ein vorderes Ende (140) aufweist, das an einer Oberfläche (142) des Riegels (110) anliegt, wenn sich das Rückhalteelement (115) in der Blockierposition und der Riegel (110) in der Schließposition befindet.

6. Luftfahrzeugtür (2) nach Anspruch 4 oder 5, wobei der Arm des Blockierkörpers (120) eine Seitenfläche (141) aufweist, und wobei eine Oberfläche (142) des Riegels (110) an einem Teil der Seitenfläche (141) des Rückhalteelements (115) anliegt, wenn sich das Rückhalteelement (115) von der Blockierposition in die Schließposition bewegt.

7. Luftfahrzeugtür (2) nach einem der Ansprüche 1 bis 6, ferner umfassend:
- eine Verbindungsstange (200), die schwenkbar mit dem Rückhalteelement (115) gekoppelt und so konfiguriert ist, dass sie das Rückhalteelement (115) aus der Blockierposition in die Freigabeposition bewegt.

8. Luftfahrzeugtür (2) nach Anspruch 1, wobei das Rückhalteelement (115) einen Beweger (210) umfasst, der mit dem Blockierkörper (120) verbunden und so bemessen ist, dass er locker zwischen den Riegel (110) und das Basiselement (105) passt, wenn sich der Riegel (110) in der Freigabeposition befindet.

9. Luftfahrzeugtür (2) nach Anspruch 8, wobei eine Oberfläche (142) des Riegels (110) eine Nut oder Kerbe (143) aufweist, die so gestaltet ist, dass sie mindestens einen Teil des Blockierkörpers (120) hält, und/oder wobei eine Oberfläche (130) des Basiselements (105) eine Nut oder Kerbe (131) aufweist, die so gestaltet ist, dass sie mindestens einen Teil des Blockierkörpers (120) hält, und
wobei der Blockierkörper (120) einen Vorsprung (122) aufweist, der so konfiguriert ist, dass er in die Nut oder Kerbe (143) des Riegels (110) oder die Nut oder Kerbe (131) des Basiselements (105) passt.

10. Luftfahrzeugtür (2) nach einem der Ansprüche 1 bis 9, ferner umfassend:
- einen Aktuator (300), der so konfiguriert ist, dass er das Rückhalteelement (115) der mehreren Türverriegelungen (100) aus der jeweiligen Blockierposition zumindest teilweise in Richtung der jeweiligen Freigabeposition bewegt.

11. Luftfahrzeugtür (2) nach einem der Ansprüche 1 bis 10, ferner umfassend:
- eine Mehrzahl von Verbindungsstangen (200, 201), die mit den Rückhalteelementen (115) benachbarter Türverriegelungen (100) gekoppelt sind, wobei jede Verbindungsstange (200, 201) so konfiguriert ist, dass sie jedes Rückhalteelement (115) der benachbarten Türverriegelungen (100) von der Blockierposition in die Freigabeposition bewegt.

12. Luftfahrzeug (1) umfassend eine Luftfahrzeugtür (2) nach einem der Ansprüche 1 bis 11.

## Revendications

1. Porte d'aéronef (2), comprenant
- un cadre de porte (10) ;
- une porte (20) disposée à l'intérieur du cadre de porte (10) ; et
- plusieurs serrures de porte (100),
dans laquelle chaque serrure de porte (100) comprend :
-- un élément de base (105) monté sur la porte (20) ;
-- un loquet (110) couplé de manière mobile à l'élément de base (105) et configuré pour passer d'une position de fermeture à une position d'ouverture ;
-- un bouchon (111) couplé au loquet (110) ;
-- un élément de retenue (115) configuré pour passer d'une position de blocage, dans laquelle l'élément de retenue (115) bloque le loquet (110) dans la position de fermeture du loquet (110), à une position de libération libérant le loquet (110) ; et
-- un élément de sollicitation (114) configuré pour déplacer le loquet (110) de la position de fermeture à la position d'ouverture ;
dans lequel, lorsque le loquet (110) de la serrure de porte (100) est en position de fermeture, le loquet (110) chevauche une partie du cadre de porte (10) et le bouchon (111) vient en butée contre une surface intérieure du cadre de porte (10), la surface intérieure du cadre de porte (10) étant orientée à l'opposé de l'extérieur de la porte (2), le bouchon (111) transférant une force agissant sur un côté intérieur de la porte (2) vers l'extérieur de la porte (2) dans le cadre de porte (10),
dans lequel, lorsque le loquet (110) est en position d'ouverture, le loquet (110) et le bouchon (111) ne se superposent pas à la partie du cadre de porte (10), et
dans lequel l'élément de retenue (115) comprend un corps de blocage (120) dimensionné et configuré pour être coincé entre le loquet (110) et l'élément de base (105) lorsque le loquet (110) est en position de fermeture.

2. Porte d'aéronef (2) selon la revendication 1, dans laquelle le loquet (110) est relié de manière pivotante ou coulissante à l'élément de base (105).

3. Porte d'aéronef (2) selon la revendication 1 ou 2, dans laquelle l'élément de sollicitation (114) est un ressort.

4. Porte d'aéronef (2) selon la revendication 1, dans laquelle le corps de blocage (120) comprend un bras relié de manière pivotante à l'élément de base (105).

5. Porte d'aéronef (2) selon la revendication 4, dans laquelle le bras du corps de blocage (120) a une extrémité avant (140) qui vient en butée contre une surface (142) du loquet (110) lorsque l'élément de retenue (115) est en position de blocage et que le loquet (110) est en position de fermeture.

6. Porte d'aéronef (2) selon la revendication 4 ou 5, dans laquelle le bras du corps de blocage (120) présente une surface latérale (141), et dans laquelle une surface (142) du loquet (110) vient en butée contre une partie de la surface latérale (141) de l'élément de retenue (115) lorsque l'élément de retenue (115) passe de la position de blocage à la position de fermeture.

7. Porte d'aéronef (2) selon l'une des revendications 1 à 6, comprenant en outre
- une bielle (200) couplée de manière pivotante à l'élément de retenue (115) et configurée pour déplacer l'élément de retenue (115) de la position de blocage à la position de libération.

8. Porte d'aéronef (2) selon la revendication 1, dans laquelle l'élément de retenue (115) comprend un mobile (210) relié au corps de blocage (120) et dimensionné pour s'adapter librement entre le loquet (110) et l'élément de base (105), lorsque le loquet (110) est en position de libération.

9. Porte d'aéronef (2) selon la revendication 8, dans laquelle une surface (142) du loquet (110) présente une rainure ou une encoche (143) configurée pour accueillir au moins une partie du corps de blocage (120), et/ou dans laquelle une surface (130) de l'élément de base (105) présente une rainure ou une encoche (131) configurée pour accueillir au moins une partie du corps de blocage (120), et dans lequel le corps de blocage (120) présente une protubérance (122) configurée pour s'insérer dans la rainure ou l'encoche (143) du loquet (110) ou dans la rainure ou l'encoche (131) de l'élément de base (105).

10. Porte d'aéronef (2) selon l'une des revendications 1 à 9, comprenant en outre :
- un actionneur (300) configuré pour déplacer l'élément de retenue (115) de la pluralité de serrures de porte (100) de la position de blocage respective au moins partiellement vers la position de libération respective.

11. Porte d'aéronef (2) selon l'une des revendications 1 à 10, comprenant en outre :
- une pluralité de bielles (200, 201) couplées aux éléments de retenue (115) des serrures de porte adjacents (100), chaque bielle (200, 201) étant configurée pour déplacer chaque élément de retenue (115) des serrures de portes adjacentes (100) de la position de blocage vers la position de libération.

12. Avion (1) comprenant une porte d'aéronef (2) selon l'une des revendications 1 à 11.
